# EUROPÄISCHE PATENTSCHRIFT

(11) **EP 1 771 322 B1**
(45) Veröffentlichungstag und Bekanntmachung des Hinweises auf die Patenterteilung: **20.02.2008**
(21) Anmeldenummer: 05746558.5
(22) Anmeldetag: 21.05.2005
(51) Int. Cl.: B60R 25/02, B60R 25/04

(54) **VORRICHTUNG ZUM ZÜNDEN UND/ODER ANLASSEN DES MOTORS IN EINEM KRAFTFAHRZEUG**
DEVICE FOR IGNITING AND/OR STARTING A MOTOR VEHICLE ENGINE
DISPOSITIF PERMETTANT D'ALLUMER ET/OU DE DEMARRER LE MOTEUR D'UN VEHICULE AUTOMOBILE

(30) Priorität: 30.07.2004 DE 102004037439
(43) Veröffentlichungstag der Anmeldung: 11.04.2007
(73) Patentinhaber: Huf Hülsbeck & Fürst GmbH & Co. KG, 42551 Velbert (DE); SIEMENS AKTIENGESELLSCHAFT, 80333 München (DE)
(72) Erfinder: SCHINDLER, Mirko, 42549 Velbert (DE); HIRCHE, Mark, 42549 Velbert (DE); KIM, Tae-Sun, 52078 Aachen (DE); ALBERS, Heiko, 93164 Laaber (DE); EMMERLING, Ulrich, 93309 Kelheim (DE); MÜLLER, Axel, 93055 Regensburg (DE)
(74) Vertreter: Mentzel, Norbert
(86) Internationale Anmeldenummer: PCT/EP2005/005541
(87) Internationale Veröffentlichungsnummer: WO 2006/012936

(56) Entgegenhaltungen:
- EP-A- 1 193 146
- DE-A1- 4 434 655
- DE-A1- 19 838 992
- US-A- 5 521 443

## Beschreibung

Die Erfindung richtet sich auf eine Vorrichtung der im Oberbegriff des Anspruches 1 angegebenen Art. Eine solche Vorrichtung dient zum Zünden und/oder Anlassen eines Motors in einem Kraftfahrzeug und ist aus der DE 198 38 992 A1 bekannt.

Damit ein Fahrzeug nur von berechtigten Personen benutzt werden kann, werden Identifikationsgeber verwendet, die sich im Besitz einer berechtigten Person befinden. Diese Identifikationsgeber, die nachfolgend kurz "ID-Geber" bezeichnet werden sollen, enthalten einen Code, der für das betreffende Fahrzeug spezifisch individualisiert ist. Ein solcher Code kann in jeder beliebigen Weise ausgebildet und z.B. mechanisch, elektrisch, magnetisch oder optisch ablesbar sein. Im Fahrzeug ist eine Aufnahme für den ID-Geber vorgesehen und im Bereich der Aufnahme ist ein Codeleser für den eingeführten ID-Geber vorgesehen.

Um die gewünschten Funktionen im Fahrzeug auszulösen, dient eine Handhabe, die aus einer Ruhestellung in wenigstens eine Arbeitsstellung bewegbar ist. Normalerweise sind dafür drei Arbeitsstellungen vorgesehen, nämlich eine üblicherweise mit ACC bezeichnete Radiostellung, wo bestimmte Teile im Fahrzeug mit der elektrischen Stromversorgung verbunden sind, ferner eine mit IGN bezeichnete Zündungsstellung, wo der Motor des Fahrzeugs läuft und schließlich eine mit RUN benannte Startstellung für den Motor. Es versteht sich, dass auch weniger Arbeitsstellungen oder weitere Arbeitsstellungen vorgesehen sein könnten. Normalerweise wird als Handhabe eine Drehhandhabe benutzt.

Es gibt ein Blockierglied, das die Handhabe normalerweise in ihrer Ruhestellung blockiert und es unberechtigten Personen nicht erlaubt, die Handhabe in die verschiedenen Arbeitsstellungen zu verdrehen. Erst wenn ein an dem Codeleser angeschlossener Auswerter feststellt, dass sich in der Aufnahme der richtige ID-Geber befindet, wird das Blockierglied freigegeben. Wenn als Handhabe eine Drehhandhabe verwendet wird, so kann als Blockierglied ein Drehblockierglied zum Zuge kommen.

Damit der ID-Geber während der von der Handhabe angesteuerten verschiedenen Funktionen im Fahrzeug nicht versehentlich aus der Aufnahme herausgelangt, ist ein Verriegelungsglied vorgesehen. Dieses Verriegelungsglied verriegelt den ID-Geber in der Aufnahme, wenn sich die Handhabe in einer ihrer Arbeitsstellungen befindet. Wenn die Handhabe aber in ihre Ruhestellung zurückbewegt worden ist, gibt das Verriegelungsglied den ID-Geber wieder frei, so dass dieser aus der Aufnahme im Fahrzeug wieder herausgezogen werden kann.

Bei der bekannten Vorrichtung der im Oberbegriff des Anspruches 1 angegebenen Art sorgt ein gesondertes Verriegelungsglied für die Verriegelung des in der Aufnahme eingeführten ID-Gebers. Das erfordert nicht nur die Herstellung und die Montage entsprechender Bauteile, sondern nimmt auch entsprechend viel Platz im Bereich der Vorrichtung ein.

Aus der EP 1 193 146 A1 ist eine Vorrichtung zum Diebstahlsschutz bei Fahrzeugen bekannt, wo ein Druckknopf manuell zu betätigen ist, um einen ID-Geber aus seiner Aufnahme mechanisch auswerfen zu können. Der ID-Geber selbst fungiert als Handhabe und verriegelt sich beim manuellen Einstecken in die Aufnahme selbst. Der Druckknopf ist an der Verriegelung des ID-Gebers nicht beteiligt; dafür dienen eigene Verriegelungsmittel, wie eine Sicherungswippe und Elektromagnete, die eine Rückbewegung der Sicherungswippe verhindern sollen. Der ID-Geber fungiert auch als Handhabe zum Anlassen des Motors; er wird beim Einstecken in die Aufnahme zunächst in eine instabile Stellung geführt, womit der Anlasser für den Fahrzeugmotor gestartet wird. Beim Loslassen der Handhabe geht der ID-Geber in eine stabile Stellung über, welche durch die vorerwähnte Wippe gesichert wird.

Der Erfindung liegt die Aufgabe zugrunde, eine zuverlässige Vorrichtung der im Oberbegriff des Anspruches 1 genannten Art zu entwickeln, die möglichst platzsparend ausgebildet ist. Dies wird erfindungsgemäß durch die im Anspruch 1 angeführten Maßnahmen erreicht, denen folgende besondere Bedeutung zukommt.

Bei der Erfindung ist die Drehhandhabe bzw. das Drehblockierglied Bestandteil der Verriegelungseinrichtung, weil an der Drehhandhabe bzw. am Drehblockierglied ein Steuermittel drehfest verbunden ist, welches unmittelbar oder mittelbar für eine Verriegelung des eingeführten ID-Gebers in der Aufnahme sorgt. Damit ist eine platzsparende und betriebssichere Verriegelung des ID-Gebers in der Aufnahme erreicht. Die Drehstellung der Handhabe oder des Blockierglieds bestimmen unmittelbar entweder die Verriegelung oder die Nicht-Verriegelung des ID-Gebers.

Weitere Maßnahmen und Vorteile der Erfindung ergeben sich aus den Unteransprüchen, der nachfolgenden Beschreibung und den Zeichnungen.

In den Zeichnungen ist die Erfindung in mehreren Ausführungsbeispielen dargestellt. Es zeigen:
- Fig. 1: eine perspektivische Darstellung einer ersten Ausführungsform der erfindungsgemäßen Vorrichtung,
- Fig. 2: die Vorderansicht des in Fig. 1 gezeigten Vorrichtung in Vergrößerung,
- Fig. 3: ein Bruchstück der in den Fig. 1 und 2 verwendeten Vorrichtung, wenn eine Ruhestellung vorliegt,
- Fig. 4: in einer der Fig. 3 entsprechenden Darstellung die Vorrichtung, wenn sich diese in einer der drei Arbeitsstellungen befindet,
- Fig. 5,: in einer zu Fig. 4 analogen Darstellung, eine Variante der erfindungsgemäßen Vorrichtung, wenn die Arbeitsstellung der dortigen Drehhandhabe bzw. die Verriegelungsposition des ID-Gebers vorliegt, und
- Fig. 6: die Draufsicht auf den im zweiten Ausführungsbeispiel benutzten ID-Gebers.

In allen Ausführungsbeispielen der Erfindung ist die Handhabe als Drehhandhabe 11 ausgebildet. Es versteht sich aber auch, dass die Handhabe als Schieber oder als schwenkbarer Griff ausgebildet sein könnte.

Die in den Zeichnungen gezeigte Drehhandhabe 11 sitzt an einem Rotor 15, der in einem Gehäuse 13 gelagert ist. Der Rotor 15 trägt bewegliche Kontakte, die - in Abhängigkeit von der Drehstellung der Handhabe - mit ruhenden Kontakten im Gehäuse 13 zusammenwirken. Dann werden in jeder Drehstellung die jeweiligen gewünschten Funktionen im Fahrzeug ausgelöst.

Normalerweise befindet sich die Drehhandhabe 11 in einer mit 11.0 in den Zeichnungen gekennzeichneten Ruhestellung, aus welcher die Handhabe im Sinne des Drehbetätigungspfeils 16 in drei verschiedene Arbeitsstellungen 11.1 bis 11.3 verstellt werden kann, die eingangs bereits näher beschrieben wurden. Die erste Arbeitsstellung ist die sogenannte ACC, die zweite 11.2 ist die "IGM" und die dritte 11.3 die Stellung "RUN". Zur Verdeutlichung, welche der drei Arbeitsstellungen 11.1 bis 11.3 oder die Ruhestellung "0" vorliegt, ist die Drehhandhabe 11 mit einer Markierung 14 versehen.

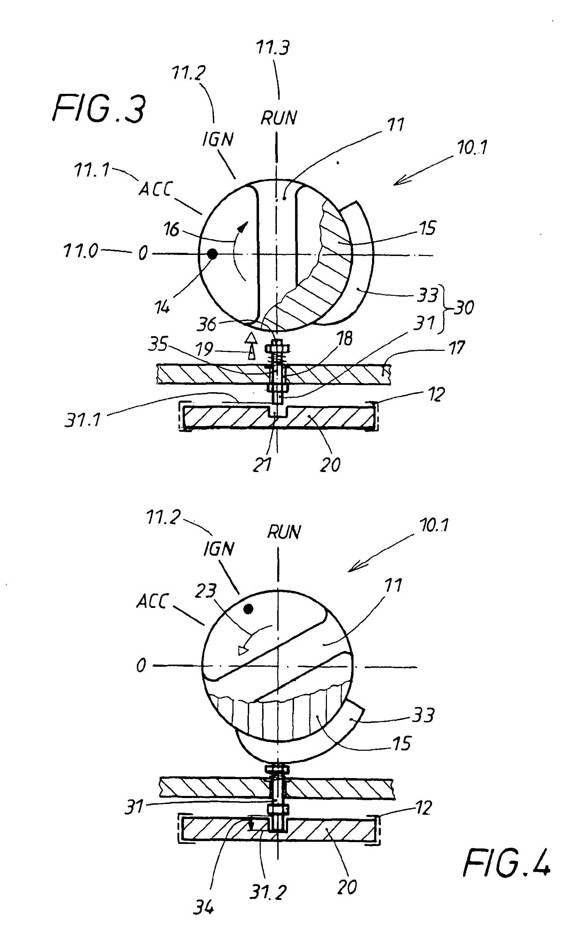

Ausweislich der Fig. 3 und 4 besteht das Verriegelungsglied 30 bei der ersten Ausführungsform der Erfindung aus einem der Drehhandhabe 11 zugeordneten Riegelstück 31. In diesem Ausführungsbeispiel besteht das Riegelstück 31 aus dem Unterende eines Bolzens 35, der in einer Führung 18 axial beweglich aufgenommen ist. Zum Verriegelungsglied 30 gehören auch noch Steuermittel, die drehfest mit der Handhabe verbunden sind und bei Drehung 16 der Handhabe 11 mit dem Bolzen 35 zusammenwirken.

Im vorliegenden Fall bestehen die Steuermittel aus einem Exzenter 33, der drehfest mit der Handhabe 11 verbunden ist. Beim Drehen 16 der Handhabe 11 dreht sich der Exzenter 33 mit. Die am Exzenter 33 sitzende Steuerkurve arbeitet im vorliegenden Fall mit einem Oberende 36 des Bolzens 35 zusammen. Das Oberende 36 liegt dem Riegelstück 31 gegenüber. Die Führung 18 für den Bolzen 35 befindet sich in einer Wand 17 des Gehäuses. Am Bolzen 35 sind Endanschläge vorgesehen, die mit den beiden Flächenseiten der Wand 17 zusammenwirken und dadurch die erwähnten beiden Positionen des Bolzens 35 bestimmen.

Der Drehbolzen 35 steht unter der Wirkung einer Federbelastung 19. Diese geht von einer Druckfeder aus, die sich zwischen der einen Seite der Wand 17 und dem einen Endanschlag des Bolzens 35 abstützt. Die Federbelastung 19 sorgt dafür, dass das als Riegelstück 31 fungierende Bolzenende sich in seiner durch die Hilfslinie 31.1 befindlichen Position befindet. Dies ist in Fig. 3 gezeigt. In Fig. 3 ist der ID-Geber 20 bereits in die Aufnahme 12 eingesteckt und man erkennt den Querschnitt durch den ID-Geber 20 in dieser Einstecklage. Dann ist das Riegelstück 31 zwar in Ausrichtung mit einer im ID-Geber 20 vorgesehenen Vertiefung 21, befindet sich aber noch außerhalb der Vertiefung 21. Damit erweist sich diese Position 31.1 als "Freigabeposition" des Riegelstücks 31.1.

Wenn die Drehhandhabe 11 im Sinne des Pfeils 16 in eine der genannten Arbeitsstellungen, z.B. 11.2 von Fig. 4, überführt worden ist, dann drückt die Steuerkurve des Exzenters 33 den Bolzen 35 gegen dessen Federbelastung 19 in die andere, in Fig. 4 mit 31.2 gekennzeichnete Position. Der Bolzen 35 ist, um das aus Fig. 4 erkennbare Wegstück 34, mit seinem Riegelstück 31 ins Innere der Vertiefung 21 eingefahren. Dann ist der ID-Geber 20 in der Aufnahme 12 verriegelt; es liegt dann eine "Verriegelungsposition" des Riegelstücks 31 vor, die in Fig. 4 durch die Hilfslinie 31.2 markiert ist.

Bei diesem ersten Ausführungsbeispiel von Fig. 3 und 4 ist die Drehhandhabe 11 mit der Steuerkurve ihres Exzenters 33 Bestandteil der Verriegelungseinrichtung für den ID-Geber. Die Vorrichtung besitzt aber auch ein nicht näher gezeigtes Drehblockierglied, das die Drehhandhabe 11 an einer Drehung 16 hindert, solange nicht der zugehörige richtige ID-Geber 20 in eine Aufnahme 12 des Fahrzeugs voll eingeschoben worden ist. In beiden Ausführungsbeispielen besteht der ID-Geber 20 aus einer Karte. In seiner Einschublage gelangt der ID-Geber in den Bereich eines Codelesers, der mit einem ebenfalls nicht näher gezeigten Auswerter zusammenwirkt.

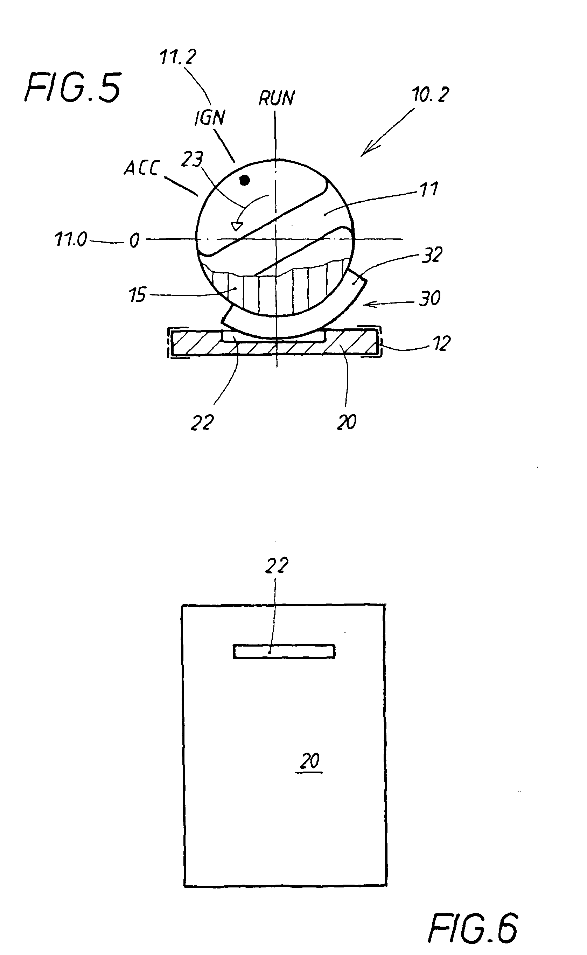

Während im ersten Ausführungsbeispiel von Fig. 3 und 4 das Verriegelungsglied 30, wie bereits erwähnt wurde, nur teilweise, nämlich durch den Exzenter 33, Bestandteil der Drehhandhabe 11 ist, wird im zweiten Ausführungsbeispiel von Fig. 5 das ganze Verriegelungsglied 30 Bestandteil der Drehhandhabe 11. Hier ist ein Riegelstück 32 drehfest mit der Handhabe 11 verbunden und besteht aus einem Drehriegel 32.

In Fig. 5 ist eine zu Fig. 4 analoge Verriegelungsposition des Drehriegels 32 gezeigt. Die dortige Drehhandhabe 11 befindet sich in der Arbeitsstellung 11.2. Dann greift der in eine entsprechende Drehposition gebrachte Drehriegel 32 in eine Aussparung 22 des ID-Gebers 20 ein, die als ein querverlaufender Schlitz ausgebildet ist. Das ergibt sich aus Fig. 6. Dann ist die Karte 20 gegenüber Manipulationen solange gesichert, wie die Drehhandhabe 11 noch nicht im Sinne des Gegendrehpfeils 23 von Fig. 5 in ihre Ruhestellung 11.0 zurückgedreht worden ist.

Eine weitere Abwandlung der Erfindung könnte darin bestehen, dass das Riegelstück nicht Bestandteil der Drehhandhabe ist, sondern Bestandteil des bereits mehrfach erwähnten Drehblockierglieds ist, welches die Drehhandhabe 11 in ihrer Ruhestellung 11.0 blockiert. Die beschriebene Drehung 16 oder Rückdrehung 23 der Drehhandhabe 11 wirkt sich auf eine entsprechende Stellung des Drehblockierglieds aus. Das Drehblockierglied könnte dann seinerseits für eine analoge mittelbare oder unmittelbare Steuerung eines Riegelstücks zwischen dessen Freigabeposition und Verriegelungsposition sorgen.

Eine weitere Aufgabe des Drehblockierglieds könnte darin bestehen, eine Rückdrehung der Handhabe in Gegendrehrichtung 23 von Fig. 4 oder 5 solange zu verhindern, bis bestimmte Betriebszustände des Motors oder des Fahrzeugs erreicht sind. Solche Betriebszustände können ein Ruhezustand des Motors und/oder ein Stillstand des Fahrzeugs sein. Wenn der Motor über einen Wahlhebel eines Automatikgetriebes betätigt wird, dann kann der Betriebszustand auch aus einer sogenannten "Parkposition" dieses Wahlhebels bestehen. Schließlich könnte man als einen Betriebszustand die angezogene Bremse des Fahrzeugs verwenden. Es versteht sich, dass wahlweise mehrere der vorgenannten Betriebszustände oder weitere andere dazu benutzt werden können, um das Drehblockierglied für eine Rückdrehung 23 der Drehhandhabe 11 erst dann freizugeben, wenn diese Betriebszustände voll erreicht sind.

Anstelle des Drehblockierglieds könnte man auch ein weiteres Festhalteglied im Fahrzeug verwenden, welches die geschilderte Rückdrehung der Drehhandhabe außerhalb der geschilderten Betriebszustände verhindert.

### Bezugszeichenliste:

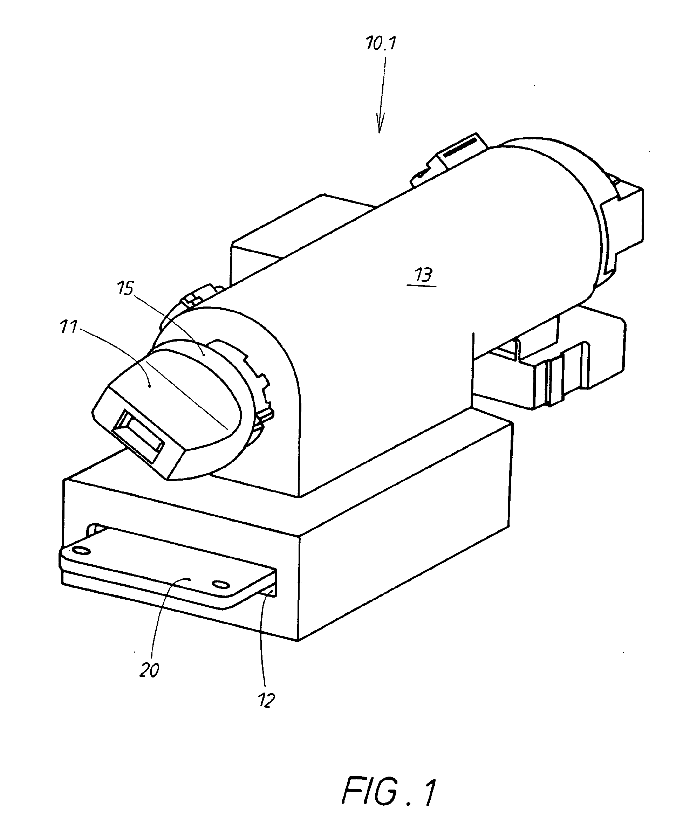

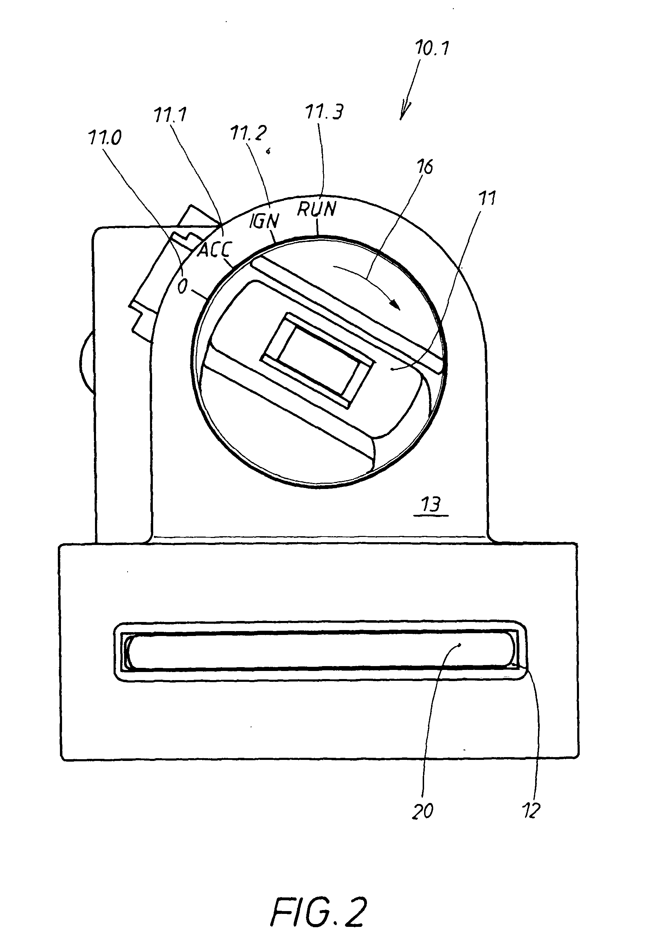

- 10.1: Vorrichtung von Fig. 1 bis 4
- 10.2: Vorrichtung von Fig. 5
- 11: Drehhandhabe
- 11.0: Ruhestellung von 11, 15, 0
- 11.1: erste Arbeitsstellung, ACC
- 11.2: zweite Arbeitsstellung, IGN
- 11.3: dritte Arbeitsstellung, RUN
- 12: Aufnahme für 20
- 13: Gehäuse von 10.1 bis 10.3
- 14: Markierung an 11
- 15: Rotor für 11
- 16: Drehbetätigungspfeil von 11
- 17: Wand in 13 (Fig. 3)
- 18: Führung für 15 (Fig. 3)
- 19: Federbelastung von 35, Druckfeder
- 20: ID-Geber
- 21: Aussparung, Vertiefung in 20 (Fig. 3, 4)
- 22: Aussparung, Schlitz in 20 (Fig. 5, 6)
- 23: Pfeil der Gegendrehung von 11 (Fig. 4, 5)

- 30: Verriegelungsglied
- 31: Riegelstück von 30, Unterende von 35
- 31.1: Freigabeposition von 31 (Fig. 3)
- 31.2: Verriegelungsposition von 31 (Fig. 4)
- 32: Riegelstück von 30, Drehriegel (Fig. 5)
- 33: Steuermittel an 11, Exzenter an 15 (Fig. 3, 4)
- 34: Weg der Verstellung von 35 zwischen 31.1 und 31.2
- 35: Bolzen (Fig. 3, 4)
- 36: Oberende von 35

## Patentansprüche

1. Vorrichtung zum Zünden und/oder Anlassen des Motors in einem Kraftfahrzeug,
mit einer Handhabe (11), die aus einer Ruhestellung (11.0) manuell in wenigstens eine Arbeitsstellung (11.1 bis 11.3) bewegbar ist, in welcher mindestens eine bestimmte Funktion im Fahrzeug auslösbar ist,
mit einem Blockierglied, das die Handhabe (11) in ihrer Ruhestellung (11.0) normalerweise blockiert,
mit einem Identifikationsgeber (ID-Geber 20), der einen fahrzeugspezifischen individuellen Code beinhaltet und sich im Besitz einer berechtigten Person befindet,
mit einer Aufnahme (12) für den ID-Geber (20) und einem in der Aufnahme (12) integrierten Codeleser für den ID-Geber (20),
mit einer Verriegelungseinrichtung (30), die den eingeführten ID-Geber (20) in der Aufnahme (12) verriegelt, wenn sich die Handhabe (11) in ihrer Arbeitsstellung (11.1 bis 11.3) befindet,
das Verriegelungsglied (30) aber den ID-Geber (20) freigibt, wenn die Handhabe (11) in ihre Ruhestellung (11.0) zurückbewegt worden ist,
und mit einem an den Codeleser angeschlossenen Auswerter, der das Blockierglied freigibt, wenn der am ID-Geber (20) abgelesene Code mit dem fahrzeugspezifischen Code übereinstimmt,
**dadurch gekennzeichnet,**
**dass** die Handhabe eine Drehhandhabe (11) und/oder dass Blockierglied ein Drehblockierglied sind,
**dass** die Drehhandhabe (11) oder das Drehblockierglied drehfest mit einem zur Verriegelungseinrichtung (30) gehörenden Steuermittel (33 oder 32) verbunden sind
und **dass** die Drehhandhabe oder das Drehblockierglied Bestandteil der Verriegelungseinrichtung (30) sind und bei ihrer Drehung aus der Ruhestellung (11.0) in die Arbeitsstellung (11.1 bis 11.3) den eingeführten ID-Geber (20) in der Aufnahme (12) verriegeln (31.2).

2. Vorrichtung nach Anspruch 1, **dadurch gekennzeichnet, dass** der Drehhandhabe (11) ein Riegelstück (31) zugeordnet ist, welches durch manuelle Drehung der Drehhandhabe zwischen zwei Positionen (31.1, 31.2) bezüglich des eingeführten ID-Gebers (20) überführbar ist,
nämlich einerseits einer Freigabeposition (31.1), wo der ID-Geber (20) in die Aufnahme (12) einsteckbar und wieder daraus herausziehbar ist, wenn sich die Drehhandhabe (11) in ihrer Ruhestellung (11.0) befindet,
und andererseits eine Verriegelungsposition (31.2), wo der ID-Geber (20) in der Aufnahme festgehalten wird, wenn sich die Drehhandhabe (11) in ihrer Arbeitsstellung (11.1 bis 11.3) befindet.

3. Vorrichtung nach Anspruch 1, **dadurch gekennzeichnet, dass** dem Drehblockierglied ein Riegelstück zugeordnet ist, das durch Umsteuerung des Drehblockierglieds zwischen zwei Positionen bezüglich des eingeführten ID-Gebers verstellbar ist,
nämlich einerseits einer Freigabeposition, wo der ID-Geber in die Aufnahme einsteckbar und wieder aus dieser herausziehbar ist, wenn das Drehblockierglied die Drehhandhabe in ihrer Ruhestellung blockiert,
und andererseits einer Verriegelungsposition, wo der ID-Geber in der Aufnahme festgehalten wird, wenn das Drehblockierglied die Drehhandhabe freigegeben hat, um die Drehhandhabe zu verdrehen, oder, nach einer Drehung, um die Drehhandhabe in eine ihrer weiteren Arbeitsstellungen weiterzudrehen.

4. Vorrichtung nach Anspruch 2 oder 3, **dadurch gekennzeichnet, dass** das Riegelstück (31) zwischen seinen beiden Positionen (31.1, 31.2) mechanisch verstellbar (34) ist.

5. Vorrichtung nach Anspruch 2 oder 3, **dadurch gekennzeichnet, dass** das Riegelstück zwischen seinen beiden Positionen elektrisch verstellbar ist.

6. Vorrichtung nach einem der Ansprüche 1 bis 5, **dadurch gekennzeichnet, dass** das Riegelstück (31) von dem an der Drehhandhabe (11) sitzenden Steuermittel (33) zwar getrennt ist, aber bei Drehung der Handhabe vom Steuermittel (33) zwischen seinen beiden Positionen (31.1, 31.2) überführbar ist.

7. Vorrichtung nach Anspruch 6, **dadurch gekennzeichnet, dass** das Riegelstück (31) zwar durch eine Federbelastung (19) bestrebt ist in seiner einen Position (Freigabeposition 31.1) zu verbleiben,
aber die Drehung (16) der Drehhandhabe (11) das Riegelstück (31) aus dieser Position (31.1) gegen die Federbelastung (19) in die andere Position (Verriegelungsposition 31.2) überführt.

8. Vorrichtung nach Anspruch 6 oder 7, **dadurch gekennzeichnet, dass** das Riegelstück aus dem Ende (31) eines Riegelbolzens (35) besteht, der in einer ortsfesten Führung (18) axial beweglich aufgenommen ist.

9. Vorrichtung nach einem der Ansprüche 6 bis 8, **dadurch gekennzeichnet, dass** das Steuermittel aus einem Exzenter (33) besteht, der mit der Drehhandhabe (11) drehfest verbunden ist.

10. Vorrichtung nach einem der Ansprüche 1 bis 5, **dadurch gekennzeichnet, dass** das Riegelstück (32) drehfest an der Handhabe (11) sitzt und das Steuermittel bildet, das mit der Drehhandhabe (11) eine als Verriegelungseinrichtung (30) fungierende Baueinheit bildet,
und dass das Riegelstück (32) der Baueinheit beim Drehen der Handhabe (11) in eine Aussparung (22) des ID-Gebers (20) einfährt und den ID-Geber (20) verriegelt, wenn sich die Drehhandhabe (11) in Arbeitsstellung (11.1 bis 11.3) befindet.

11. Vorrichtung nach einem der Ansprüche 1 bis 9, **dadurch gekennzeichnet, dass** die Ausnehmung aus einer Vertiefung (21) im ID-Geber (20) besteht.

12. Vorrichtung nach einem der Ansprüche 1 bis 10, **dadurch gekennzeichnet, dass** die Ausnehmung aus einem Schlitz (22) im ID-Geber (20) gebildet ist.

13. Vorrichtung mit mehreren Arbeitsstellungen (11.1 bis 11.3) für die Drehhandhabe (11) nach einem der Ansprüche 1 bis 12, **dadurch gekennzeichnet,**
**dass** entweder das Drehblockierglied oder ein weiteres Festhalteglied eine Rückdrehung der in ihrer ersten Arbeitsstellung (11.1) gebrachten Drehhandhabe (11) verhindert, aber ein Weiterdrehen der Drehhandhabe (11) gestattet, solange bestimmte Betriebszustände nicht erreicht sind.

14. Vorrichtung nach Anspruch 13, **dadurch gekennzeichnet, dass** der bestimmte Betriebszustand aus dem Ruhezustand des Motors besteht.

15. Vorrichtung nach Anspruch 13 oder 14, **dadurch gekennzeichnet, dass** der bestimmte Betriebszustand das unbewegliche Fahrzeug ist.

16. Vorrichtung nach einem der Ansprüche 13 bis 15, **dadurch gekennzeichnet, dass** wenigstens einer der Betriebszustände darin besteht, dass der Wahlhebel eines Automatikgetriebes sich in seiner "Parkposition" befindet.

17. Vorrichtung nach einem der Ansprüche 13 bis 15, **dadurch gekennzeichnet, dass** wenigstens einer der Betriebszustände darin besteht, dass die Bremse angezogen ist.

## Claims

1. Device for igniting and/or starting the engine of a vehicle,
with a handle (11), that can be manually moved from an at-rest position (11.0) to at least one working position (11.1 to 11.3) in which at least one specific function in the vehicle can be activated,
with a blocking element that normally blocks the handle (11) in the at-rest position (11.0) of said handle (11),
with an identification transmitter (ID transmitter 20) that has a vehicle-specific individual code and is in the possession of an authorised person,
with a receptacle (12) for the ID transmitter (20) and a code reader for the ID transmitter (20) integrated into the receptacle (12),
with a locking device (30) that locks the ID transmitter (20) inserted into the receptacle (12) when the handle (11) is in its working position (11.1 to 11.3),
but that the locking device (30) releases the ID transmitter (20) when the handle (11) has been moved back to its at-rest position (11.0),
with an analyser connected to the code reader, which releases the blocking element when the code read on the ID transmitter (20) agrees with the vehicle-specific code,
**characterised in that**
the handle is a rotary handle (11) and/or the locking element is a rotary blocking element,
the rotary handle (11) or the rotary blocking element is torque-proof connected to a control means (33 or 32) belonging to the locking device (30)
and that the rotary handle or rotary blocking element is part of the locking device (30) and when the rotary handle or rotary locking element is rotated from its at-rest position (11.0) to the working position (11.1 to 11.3) the inserted ID transmitter (20) is locked (31.2) in the receptacle (12).

2. Device according to Claim 1, **characterised in that** a locking pin (31), which can be moved between two positions (31.1, 31.2) relative to the inserted ID transmitter (20) by manual rotation of the rotary handle, is assigned to the rotary handle (11),
i.e. on one hand to a release position (31.1), at which the ID transmitter (20) can be plugged into the receptacle (12) and again withdrawn, when the rotary handle (11) is in its at-rest position (11.0)
and on the other hand to a locking position (31.2) at which the ID transmitter (20) is held in the receptacle, when the rotary handle (11) is in its working position (11.1 to 11.3).

3. Device according to Claim 1, **characterised in that** a locking pin is assigned to the rotary blocking element, with the locking pin being moveable between two positions relative to the inserted ID transmitter by the changeover of the rotary locking element,
i.e. on one hand a release position at which the ID transmitter can be plugged into the receptacle and again withdrawn from same when the rotary blocking element blocks the rotary handle in its at-rest position,
and on the other hand a locking position at which the ID transmitter is held in the receptacle, when the rotary locking element releases the rotary handle, in order to rotate the rotary handle or, after a rotation, in order to rotate the rotary handle further to its further working positions.

4. Device according to Claim 2 or 3, **characterised in that** the locking pin (31) is mechanically moveable between its two positions (31.1, 31.2).

5. Device according to Claim 2 or 3, **characterised in that** the locking pin is electrically moveable between its two positions.

6. Device according to one of Claims 1 to 5, **characterised in that** the locking pin (31) is separate from the control means (33) seated on the rotary handle (11) but when the handle is rotated the locking pin (31) can be moved by the control means (33) between its two positions (31.1, 31.2).

7. Device according to Claim 6, **characterised in that** the locking pin (31) is held by spring pressure (19) in its one position (release position (31.1)),
but on rotation (16) of the handle (11) the locking pin (31) is moved from this position (31.1) against spring pressure (19) to the other position (locking position (31.2).

8. Device according to Claim 6 or 7, **characterised in that** the locking pin consists of the end (31) of a locking bolt (35) that is supported in a fixed guide (18) so that it can move axially.

9. Device according to one Claims 6 to 8, **characterised in that** the control means consists of a cam (33) that is torque-proof fixed to the rotary handle (11).

10. Device according to one of Claims 1 to 5, **characterised in that** the locking pin (32) is torque-proof seated on the handle (11) and the control means, which together with the rotary handle (11) forms an assembly functioning as a locking device (30),
and that the locking pin (32) movie into an opening (22) of the ID transmitter (20) when the handle (11) is rotated and locks the ID transmitter (20) when the rotary handle (11) is in its working position (11.1 to 11.3).

11. Device according to one of Claims 1 to 9, **characterised in that** the opening consists of a recess (21) in the ID transmitter (20).

12. Device according to one of Claims 1 to 10, **characterised in that** the opening is formed by a slot (22) in the ID transmitter (20).

13. Device with several working positions (11.1 to 11.3) for the rotary handle (11) according to one of Claims 1 to 12, **characterised in that**
either the rotary blocking element or a further retaining element prevents the rotary handle (11) being rotated back when it has been brought to its first working position (11.1) but permits onward rotation of the rotary handle (11) provided specific operating states have not been reached.

14. Device according to Claim 13, **characterised in that** the specific operating state consists of the shutdown state of the engine.

15. Device according to Claim 13 or 14, **characterised in that** the specific shutdown state is the immobile vehicle.

16. Device according to one of Claims 13 to 15, **characterised in that** at least one of the operating states consists of the selector lever of an automatic transmission being in its "park" position.

17. Device according to one of Claims 13 to 15, **characterised in that** at least one of the operating states consists of the brakes being applied.

## Revendications

1. Dispositif permettant d'allumer et/ou de faire démarrer le moteur d'un véhicule automobile
avec un moyen de maniement (11) déplaçable manuellement d'une position de repos (11.0) vers au moins une position de travail (11.1 à 11.3), dans laquelle il est possible de déclencher au moins une fonction précise dans le véhicule,
avec un organe de blocage qui normalement bloque le moyen de maniement (11) dans sa position de repos (11.0),
avec un transmetteur d'identification (transmetteur d'ID, 20) contenant un code individuel spécifique au véhicule et se trouvant en possession d'une personne ayant droit à le détenir,
avec un réceptacle (12) pour le transmetteur d'ID (20) et un lecteur intégré dans le réceptacle (12) et servant à lire le code du transmetteur d'ID (20),
avec un dispositif de verrouillage (30) verrouillant le transmetteur d'ID (20) après que celui-ci a été introduit dans le réceptacle (12), lorsque le moyen de maniement (11) se trouve sur sa position de travail (11.1 à 11.3),
mais l'organe de verrouillage (30) libérant le transmetteur d'ID (20) lorsque le moyen de maniement (11) a été ramené sur sa position de repos (11.0),
et avec un appareil d'analyse raccordé au lecteur de code, appareil qui débloque l'organe de blocage s'il constate que le code lu dans le transmetteur d'ID (20) concorde avec le code spécifique du véhicule,
**caractérisé en ce que**
le moyen de maniement est un moyen de maniement rotatif (11) et/ou que l'organe de blocage est un organe bloquant la rotation,
le moyen de maniement rotatif (11) ou l'organe bloquant la rotation est relié à un moyen de commande (33 ou 32) appartenant au dispositif de verrouillage (30),
et **en ce que** le moyen de maniement rotatif ou l'organe bloquant la rotation fait partie intégrante du dispositif de verrouillage (30) et que, tandis qu'il quitte en tournant la position de repos (11.0) pour gagner la position de travail (11.1 à 11.3), il verrouille (31.2) dans le réceptacle (12) le transmetteur d'ID (20) qui a été introduit dedans.

2. Dispositif selon la revendication 1, **caractérisé en ce qu'**au moyen de maniement rotatif (11) a été assigné une pièce-verrou (31) qui, lorsqu'on déplace par rotation ce moyen de maniement, est transférable entre deux positions (31.1, 31.2) relativement au transmetteur d'ID (20) introduit,
à savoir d'une part d'une position de déblocage (31.1) dans laquelle il est possible d'introduire le transmetteur d'ID (20) dans le réceptacle (12) et de l'en extraire à nouveau lorsque le moyen de maniement rotatif (11) se trouve dans sa position de repos (11.0),
vers d'autre part une position de verrouillage (31.2) dans laquelle le transmetteur d'ID (20) est retenu dans le réceptacle lorsque le moyen de maniement rotatif (11) se trouve sur sa position de travail (11.1 à 11.3).

3. Dispositif selon la revendication 1, **caractérisé en ce qu'**à l'organe bloquant la rotation a été assignée une pièce-verrou déplaçable, par inversion de l'organe bloquant la rotation, entre deux positions relativement au transmetteur d'ID qui a été introduit.
à savoir d'une part une position de déblocage dans laquelle il est possible d'introduire le transmetteur d'ID dans le réceptacle et de l'en extraire à nouveau lorsque l'organe bloquant la rotation bloque le moyen de maniement rotatif dans sa position de repos,
et d'autre part une position de verrouillage dans laquelle le transmetteur d'ID est retenu dans le réceptacle une fois que l'organe bloquant la rotation a libéré le moyen de maniement rotatif pour permettre de le tourner ou, après une rotation, pour continuer de tourner le moyen de maniement rotatif pour l'amener sur une autre de ses positions de travail.

4. Dispositif selon la revendication 2 ou 3, **caractérisé en ce que** la pièce verrou (31) est déplaçable (34) mécaniquement entre ses deux positions (31.1, 31.2).

5. Dispositif selon la revendication 2 ou 3, **caractérisé en ce que** la pièce-verrou est déplaçable électriquement entre ses deux positions.

6. Dispositif selon l'une des revendications 1 à 5, **caractérisé en ce que** la pièce-verrou (31) est certes séparée du moyen de commande (33) en assise contre le moyen de maniement rotatif (11), mais qu'elle est transférable par le moyen de commande (33), lorsqu'on tourne le moyen de maniement rotatif, de l'une vers l'autre de ses deux positions (31.1, 31.2).

7. Dispositif selon la revendication 6, **caractérisé en ce que** la pièce-verrou (31) tend certes, sous l'effet d'une contrainte ressort (19), à rester sur une position sienne (la position de déblocage 31.1),
mais **en ce que** la rotation (16) du moyen de maniement rotatif (11) transfère la pièce-verrou (31), en vainquant la contrainte ressort (19), de cette position (31.1) vers l'autre position (position de verrouillage 31.2).

8. Dispositif selon la revendication 6 ou 7, **caractérisé en ce que** la pièce-verrou se compose de l'extrémité (31) d'un pêne de verrouillage (35) logé dans un guide fixe (18) dans lequel il se déplace axialement.

9. Dispositif selon l'une des revendications 6 à 8, **caractérisé en ce que** le moyen de commande se compose d'un excentrique (33) relié solidaire en rotation avec le moyen de maniement rotatif (11).

10. Dispositif selon l'une des revendications 1 à 5, **caractérisé en ce que** la pièce-verrou (32) se trouve en assise solidaire en rotation contre le moyen de maniement (11), et forme le moyen de commande qui, avec le moyen de maniement (11), constitue une unité constructive officiant de dispositif de verrouillage (30),
et **en ce que** la pièce-verrou (32) de l'unité constructive pénètre dans un évidement (22) du transmetteur d'ID (20) lorsqu'on tourne le moyen de maniement (11), ce qui verrouille le transmetteur d'ID (20) lorsque le moyen de maniement rotatif (11) se trouve en position de travail (11.1 à 11.3).

11. Dispositif selon l'une des revendications 1 à 9, **caractérisé en ce que** l'évidement se compose d'un creux (21) ménagé dans le transmetteur d'ID (20).

12. Dispositif selon l'une des revendications 1 à 10, **caractérisé en ce que** l'évidement est formé par une fente (22) ménagée dans le transmetteur d'ID (20).

13. Dispositif comportant plusieurs positions de travail (11.1 à 11.3) destinées au moyen de maniement rotatif (11) selon l'une des revendications 1 à 12, **caractérisé en ce que**
soit l'organe de blocage de la rotation, soit un autre organe de retenue empêche le moyen de maniement rotatif (11) de revenir en arrière après que ce dernier a été amené sur sa première position de travail (11.1), mais permet de poursuivre le mouvement du moyen de maniement rotatif (11) tant que certains états de service n'ont pas été atteints.

14. Dispositif selon la revendication 13, **caractérisé en ce que** l'état de service précis se compose de l'état de repos du moteur.

15. Dispositif selon la revendication 13 ou 14, **caractérisé en ce que** l'état de service précis est le véhicule immobile.

16. Dispositif selon l'une des revendications 13 à 15, **caractérisé en ce qu'**au moins l'un des états de service consiste **en ce que** le levier de vitesses d'une boîte automatique se trouve sur sa « position de parking ».

17. Dispositif selon l'une des revendications 13 à 15, **caractérisé en ce qu'**au moins l'un des états de service consiste **en ce que** le frein est serré.
